# EUROPEAN PATENT APPLICATION

(11) **EP 4 765 478 A1**
(43) Date of publication of application: **24.06.2026**
(21) Application number: 24221612.5
(22) Date of filing: 19.12.2024
(51) Int. Cl.: H01Q 1/24, H01Q 5/378, H01Q 9/40

(54) **TRANSMISSION SYSTEM FOR A WIRELESS MOBILE ELECTRONIC DEVICE**

(71) Applicant: Sonova AG, 8712 Stäfa (CH)
(72) Inventor: Jaafar, Hussein, 1580 Avenches (CH)
(74) Representative: Schwan Schorer & Partner mbB

(57) **Abstract**

There is provided a transmission system for a wireless mobile electronic device, comprising: a ground plane (20); a first antenna element which is separate from the ground plane and which is implemented as a strip (30) comprising a feeding end (31) configured to be coupled to a transceiver (60) for feeding an RF signal to the first antenna element and a free end (32), wherein the strip comprises a first arm (33) including the feeding end and a second arm (34) extending at an angle from the first arm; and a second antenna element (40) separate from the first antenna element, which is shorted to the ground plane so as to act as a parasitic element. The first and second antenna elements are located adjacent to each other at an end (23) of the ground plane, the second arm of the first antenna element points towards the second antenna element, and the arrangement formed by the first and second antenna elements has no symmetry plane.

## Description

The invention relates to a transmission system for a wireless mobile electronic device, such as a wireless microphone device, comprising an antenna.

Wireless microphones have revolutionized the way individuals with hearing impairments interact with modern communication devices. By wirelessly connecting hearing aids to smartphones, televisions, and other Bluetooth-enabled devices, such as wireless microphones, it is possible to enhance the user experience by delivering clear, high-quality audio directly to the hearing aids. However, integrating Bluetooth communication into such compact and specialized devices presents a unique set of challenges, particularly in the design of the antenna.

The primary challenge lies in balancing the need for a small, discreet form factor with the technical requirements for reliable Bluetooth performance. Bluetooth antennas must be finely tuned to operate effectively within the 2.4 GHz frequency band, ensuring robust signal strength and minimal interference. In wireless microphones, the antenna must be small enough to fit within the limited space available, yet efficient enough to maintain stable connections even in environments with numerous competing signals. Another main challenge is the radiation pattern of the compact antenna, which is desired to be quasi-isotropic (radiating equally in all directions) in order to ensure a reliable communication with all the hearing aids despite their angular location in a given space. The difficulty in achieving such a radiation pattern is due to the antenna's ground plane which becomes a major contributor in the overall radiation resulting in generating nulls in the pattern of the antenna. Such nulls might result in a non-uniform radiation pattern.

US 2022/0006193 A1 relates to an isotropic antenna for implantable medical devices with a design based on an excited loop antenna that couples with an adjacent dipole antenna. The orthogonal radiation patterns of the loop and the dipole antenna add up in order to generate a quasi-isotropic radiation pattern.

US 2011/0068997 A1 relates to an isotropic radiator with three monopole antennas that are arranged perpendicular to one another in a 3D configuration. The fields of the monopole antennas add up together to generate a null-free radiation pattern.

EP 2 290 746 A1 relates to a planar isotropic antenna comprised of a dipole mounted on the first surface of the substrate, wherein at each side of the dipole a spiral microstrip line is electrically connected and mounted on the second surface of the substrate. Moreover, switches are connected to the microstrip lines to configure the operation of the antenna.

US 2019/0123439 A1 relates to an antenna formed by two open loop structures which can be pivoted relative to each other. The antenna radiates a quasi-isotropic pattern when the two open loop structures are oriented perpendicular to one another. One of the two loop structures is arranged parallel to a ground plane and is connected to ground plane via a shorting conductor. The two loop structures are connected via a feeding conductor.

US 2023/0420856 A1 relates to a Huygens antenna which combines a magnetic and electric dipole to generate a unidirectional antenna. The antenna is comprised of an S shaped structure placed on the top of a ground plane. A circularly polarized configuration is achieved by placing two S-shaped dipoles perpendicular to each other and feeding them with a 90° phase shift.

It is an object of the invention to provide for a transmission system for a wireless mobile electronic device having an antenna which is relatively compact and provides for relatively isotropic radiation characteristics.

According to the invention, this object is achieved by a transmission system as defined in claim 1.

The solution defined in claim 1 is beneficial in that, by providing a driven first antenna element and a parasitic second antenna element adjacent to each other at an end of the ground plane, in an arrangement which has no symmetry plane, what, in principle, allows to break a symmetry of the ground plane, the contribution of multiple modes in the radiation pattern is favored so that electric and magnetic radiation modes combine in way that allows to achieve a close to isotropic radiation pattern due to the coupling of the two antenna elements. In particular, a magnetic loop formed by the two antenna elements and the ground plane generates magnetic dipole radiation and the driven first antenna element generates electric dipole radiation, wherein the electric field and the magnetic field are orthogonal with amplitudes close to equal and a phase shift close to 90°, and wherein the current in the ground plane concentrates at the end where the antenna elements are located. The driven first antenna element excites the ground plane modes, while the resonance behavior of these modes is tuned by the coupling driven first antenna element with the shorted parasitic second antenna element.

The parasitic second antenna element acts to increase the electrical length of the ground plane in order to tune higher order modes in a manner so as to achieve a desired current distribution at a frequency of interest, thereby providing for an additional degree of freedom in the antenna design.

The reduced antenna directivity of a quasi-isotropic radiation pattern allows for a more reliable link with the receiver devices, since from a regulatory point of view it allows to transmit higher power by the wireless chipset and consequently, on average, a larger communication range. The reduced antenna gain of a quasi-isotropic radiation pattern may also be helpful in facilitating a certification process of a product utilizing such antenna.

The concentration of the current in ground at or near the end where the antenna elements are located reduces interaction between the antenna and the neighboring EM environment. For example, it may render the antenna less susceptible to interference from radio frequency (RF) components located close to the antenna.

According to one example, the second arm of the first antenna element is shorter than the first arm of the first antenna element; for example the first arm of the first antenna element may have a length of 5 (0.04A) to 15 mm (0.12*λ*), and the second arm of the first antenna element may have a length of 1 (0.008*λ*) to 10 mm (0.08*λ*).

According to one example, the second arm of the first antenna element forms an angle of about 90 degrees with the first arm of the first antenna element.

According to one example, the second arm of the first antenna element comprises the free end of the strip of the first antenna element.

According to an alternative example, the first antenna element may comprise a third arm extending from the second arm in a direction substantially parallel to the first arm so as to form a meander defined by the first to third arm and a fourth arm extending from the third arm at angle so as to point towards the second antenna element. In particular, the third arm of the first antenna element may be longer than the second arm of the first antenna element and shorter than the first arm of the first antenna element, and the fourth arm of the first antenna element may be shorter than the third arm of the first antenna element. For example, the third arm of the first antenna element may have a length of 2 (0.016*λ*) to 10 mm (0.08*λ*), and the fourth arm of the first antenna element may have a length of 1 (0.008*λ*) to 5 mm (0.04*λ*).

According to one example, the fourth arm of the first antenna element may comprise the free end of the strip of the first antenna element. Alternatively, the first antenna element may comprise a fifth arm extending from the fourth arm at an angle so as to form a meander defined by the third to fifth arm, wherein, for example, the fifth arm of the first antenna element may comprise the free end of the strip of the first antenna element. In particular, the fifth arm of the first antenna element may be longer than the fourth arm of the first antenna element. For example, the fifth arm of the first antenna element may have a length of 2 (0.016*λ*) to 10 mm (0.08*λ*).

According to one example, the strip of the first antenna element may have a width of from 0.1 (0.0008*λ*) to 3 mm (0.024*λ*).

According to one example, the distance of the free end of the strip of the first antenna element to said end of the ground plane may be at least 5 mm (0.04*λ*).

According to one example, the lateral distance of the free end of the strip of the first antenna element to the second antenna element may be at least 2 mm (0.016*λ*).

According to one example, the second antenna element may comprise a first strip having an end electrically connected to the ground plane and a free end. The first strip may comprise a first arm and a second arm extending at an angle from the first arm so that the second arm points towards the first antenna element, wherein the first arm comprises the end which is electrically connected to the ground plane. In particular, the second arm of the first strip may be shorter than the first arm of the first strip. For example, the first arm of the first strip may have a length of 5 (0.04*λ*) to 15 mm (0.12*λ*), and the second arm of the first strip may have a length of 1 (0.008*λ*) to 17 mm (0.136*λ*).

The first arm of the first strip may oriented at an angle of from 30 to 150 degrees relative to the edge formed by the end of the ground plane, and the second arm of the first strip may be oriented at an angle of from 30 to 150 degrees with regard to the first arm of the first strip.

According to one example, the second arm of the first strip may comprise an end forming the free end of the first strip.

Alternatively, the first strip of the second antenna element may comprise a third arm comprising an end forming the free end of the first strip and extending from the second arm at an angle so that the free end of the first strip points towards the ground plane. In particular, the first arm of the first strip may be shorter than the second arm of the first strip, and the third arm of the first strip may be shorter than the first arm. For example, the third arm of the first strip of the second antenna element may have a length of 1 (0.008*λ*) to 10 mm (0.08*λ*).

According to one example, the first strip of the second antenna element may have a width larger than the width of the strip forming the first antenna element.

According to one example, the width of the first strip of the second antenna element may be from 0.1 (0.0008*λ*) to 3 mm (0.024*λ*).

According to one example, the second antenna element may comprise a second strip having an end connected to the end of the ground plane and a free end. In particular, the second strip of the second antenna element may have a straight shape and may extend away from the end of the ground plane parallel to the first arm of the first strip of the second antenna element towards the second arm of the first strip of the second antenna element.

According to one example, the second antenna element may comprise a plurality of parallel straight strips, each having a free end and an end shorted to the ground plane.

According to one example, each antenna element may be located at one of the two lateral edges of the end of the ground plane.

According to one example, the ground plane may have an elongate shape defining a longitudinal direction and a transverse direction, wherein the end at which the antenna elements are located is one of the two longitudinal ends of the ground plane. In one example, the antenna elements in the transverse direction do not extend beyond the end of the ground plane at which the antenna elements are located.

According to one example, the ground plane may have a substantially rectangular shape. In particular, the ground plane may have a length of 60 (0.48*λ*) to 150 mm (1.2*λ*) and a width of 15 (0.12*λ*) to 45 mm (0.36*λ*). For example, the ground plane may have a length to width ratio of 3 to 10.

According to one example, there is a longitudinal gap between the feeding end of the first antenna element (30) and the end of the ground plane where the antenna elements are located of from 0.2 (0.0016*λ*) to 1 mm (0.008*λ*).

According to one example, each of the first and second antenna element may extend by 5 (0.04*λ*) to 15mm (0.12*λ*) in the longitudinal direction beyond the end of the ground plane where the antenna elements are located in the longitudinal direction.

According to one example, the first antenna element and the second antenna element may be implemented as conductor traces on a PCB. In particular, the antenna elements may be located in the same layer of the PCB. Further, the ground plane may be implemented as a conductor plane of the PCB; in particular, the ground plane may be located in the same layer of the PCB as the antenna elements.

For example, the antenna elements may be implemented on an FR4 substrate of the PCB.

According to one example, the transmission system comprises the transceiver. The transceiver may be implemented by an RF chipset. The feeding end of the first antenna element may be coupled to the transceiver via a matching network. In particular, the matching network and the RF chipset may be mounted at the PCB and may be referenced to the ground plane.

According to one example, the transceiver may be configured to generate the RF signal at frequencies between 2.4 and 2.4835 GHz. In particular, the transceiver may be configured to generate the RF signal in the 2.4 GHz ISM-band.

According to one example, the first antenna element may be configured to generate electric dipole radiation, wherein the first and second antenna elements and the ground plane may be configured to form a magnetic loop to generate magnetic dipole radiation. In particular, the electric dipole radiation and the magnetic dipole radiation may have mutually orthogonal fields with substantially equal amplitude so as to result in a substantially isotropic radiation pattern.

According to one example, the first and second antenna elements may be configured to provide a current distribution where the current in the ground plane concentrates at or near the end of the ground plane where the first and second antenna elements are located.

According to one example, the first antenna element may be configured to excite ground plane modes, the resonance of which modes is tuned by the second antenna element.

The invention also relates to a wireless microphone device comprising a transmission system as defined in claim 1 and a microphone arrangement.

Preferred embodiments of the invention are defined in the dependent claims.

Hereinafter, examples of the invention will be illustrated by reference to the attached drawings, wherein:
- Fig. 1: is a schematic illustration of an example of a transmission system according to the invention;
- Fig. 2: is a top view of an example of the ground plane and the two antenna elements of a transmission system according to the invention;
- Fig.3: is an enlarged representation of the two antenna elements of Fig. 2;
- Figs. 4A and 4B: are simulation results of the surface current distribution and the radiation pattern at 2.44 GHz, respectively, of an example of the ground plane and the two antenna elements of a transmission system according to the invention;
- Figs. 5A to 5C: show various examples of the driven first antenna element of a transmission system according to the invention;
- Figs. 6A to 6D: show various examples of the parasitic second antenna element of a transmission system according to the invention; and
- Figs. 7A to 7D: show various examples of how the two antenna elements of a transmission system according to the invention may be arranged relative to each other.

The term "the first and second antenna elements are located adjacent to each other at an end of the ground plane" as used hereinafter does not imply that the first antenna element is connected to or touches that end of the ground plane. Rather, the first antenna element may be separated by a gap from that end of the ground plane.

The term "ground plane" as used hereinafter refers to a reference plane which serves as the signal return path for electronic components of the mobile electronic device and hence as the reference point for the electric potential. The ground plane may be implemented as a conductor layer of a PCB (printed circuit board) carrying the electronic components and also the first and second antenna element implemented as conductor traces on the PCB. It is to be noted that in practice there may of cut-outs at the edges and/or openings in the ground plane, e.g. for vias or fixation elements.

The term "arm" as used hereinafter does not imply that the arm is perfectly straight; rather, an arm may comprise slightly bent portions. as long as the overall change of the orientation / direction is less than 30 degrees. Further, two arms may be directly connected or via a bent or rounded transition portion, with the arms being arranged at an angle of from 30 to 150 degrees relative to each other.

The dimensions given in *mm* herein apply to a use of the transmission system with a transceiver operating with RF signals in the 2.4 GHz ISM-band. In addition, the dimensions also are given in multiples of the wavelength λ of the RF transceiver signals, so that the dimensions appropriate for frequencies other than in 2.4 GHz ISM-band can be easily calculated.

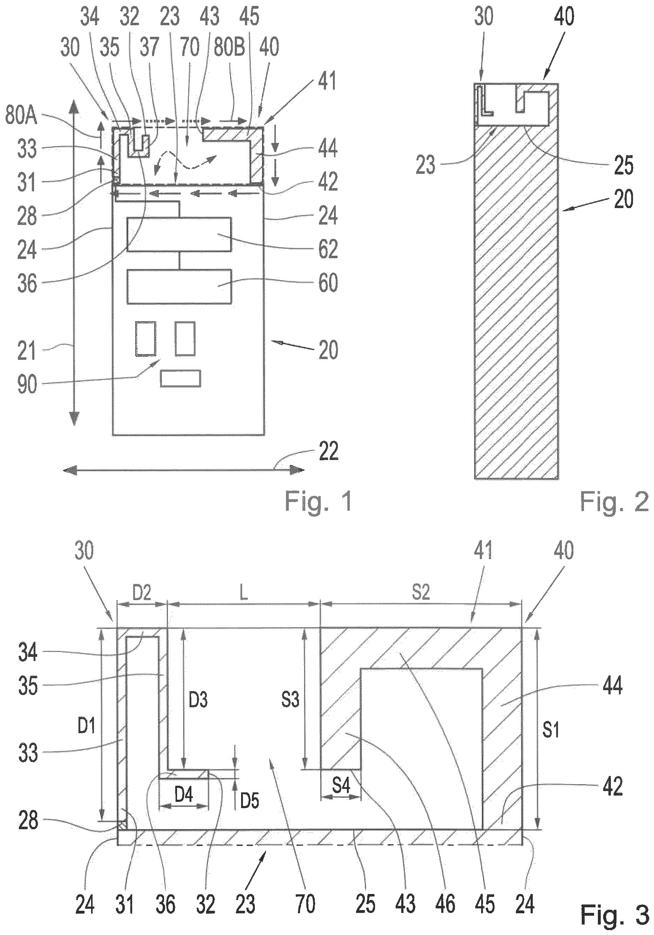

Fig. 1 is a schematic illustration of an example of a transmission system 10 according to the invention, comprising a ground plane 20, a first antenna element 30 and a shorted second antenna element 40. The first and second antenna elements 30, 40 are located adjacent to each other at an end 23 of the ground plane 20. The antenna elements 30, 40 and the ground plane 40 may be implemented as parts of a PCB.

The first antenna element 30 is separate from the ground plane and is implemented as a meandered strip 30 comprising a feeding end 31 coupled to a transceiver 60 for feeding an RF signal to the first antenna element and a free end 32.

The second antenna element 40 separate from the first antenna element 30 and is shorted to the ground plane 20 so as to act as a parasitic element. The second antenna element 40 has a shape different from that of first antenna element 30 so as to break a symmetry of the ground plane 20.

The distance of the free end 32 of the strip 30 of the first antenna element 30 to the end 23 of the ground plane 20 may be at least 5 mm (0.04*λ*), and the distance of the free end 32 of the strip 30 of the first antenna element 30 to the second antenna element 40 may be at least 2 mm (0.016*λ*).

The ground plane 20 has an elongate shape defining a longitudinal direction 21 and a transverse direction 22, wherein the antenna elements 30, 40 are located at one end 23 of the two longitudinal ends of the ground plane 20. In the example of Fig. 1 the ground plane 20 has a substantially rectangular shape and each antenna element 30, 40 is located at one of the two lateral edges 24 of the longitudinal end 23 of the ground plane 20.

While each of the first and second antenna element 30, 40 extends beyond the end 23 of the ground plane 20 in the longitudinal direction 21, for example by 5 (0.04*λ*), to 15mm (0.12*λ*), the antenna elements 30, 40 do not extend beyond lateral edges 24 of the ground plane 20 in the transverse direction 22.

For example, the ground plane 20 may have a length of 60 (0.48*λ*) to 150 (1.2*λ*), mm and a width of 15 (0.12*λ*) to 45 (0.36*λ*) mm, wherein the length to width ratio may be from 3 to 10. In practice, the ground plane 20 may have a shape which deviates to some extent from a perfectly rectangular shape, e.g. due to the presence of cut-outs at the edges and/or openings in the ground plane for vias or fixation elements.

The feeding end 31 of the first antenna element is coupled to the transceiver 60 via a matching network 62. The transceiver 60 may be implemented by an RF chipset. The matching network 62 and the RF chipset 60 may be mounted on the PCB and may be referenced to the ground plane 20.

The transceiver may be configured to generate the RF signal at frequencies between 2.4 and 2.4835 GHz; in particular, the transceiver 60 may be configured to generate the RF signal in the 2.4 GHz ISM-band. In other examples, other frequencies may be chosen. For example, the transceiver 60 may be configured to generate the RF signal at frequencies around 5 GHz.

Additional electronic components 90 may be mounted on the PCB and referenced to the PCB.

The strip 30 of the first antenna element may have, for example, a width (dimension "D5" in Fig. 3) of from 0.1 (0.0008*λ*) to 3 mm (0.024*λ*).

In the example of Fig. 1 the strip 30 comprises a first arm 33 extending away from the end 23 of the ground plane 20 at an angle of from 30 to 150 degrees (about 90 degrees in the example shown in Fig. 1) relative to the longitudinal edge 25 formed by the 23 end of the ground plane 20., i.e., in the longitudinal direction 21, and including the feeding end 31, wherein there is a longitudinal gap 28 (see Fig. 3) between the feeding end 31 and the end 23 of the ground plane 20 of from 0.2 (0.0016*λ*) to 1 mm (0.008*λ*). The strip 30 further comprises a second arm 34 extending at an angle of from 30 to 150 degrees (about 90 degrees in the example shown in Fig. 1) from the first arm 33 so that it points towards the second antenna element 40, a third arm extending 35 from the second arm 34 in a direction substantially parallel to the first arm 33 (i.e., in the longitudinal direction 21 ) so as to form a meander or half-loop defined by the first to third arm, a fourth arm 36 extending from the third arm at angle of from 30 to 150 degrees (about 90 degrees in the example shown in Fig. 1) so as to point towards the second antenna element 40 and a fifth arm 37 extending from the fourth arm 36 at an angle of about 90 degrees so as to form a meander or half-loop defined by the third to fifth arm. The fifth arm 37 of the first antenna element comprises the free end 23 of the strip 30. The first arm 33, the third arm 35 and the fifth arm 37 extend in the longitudinal direction 21, whereas the second arm 34 and the fourth arm 36 extend in the transverse direction 22.

In the example of Fig. 1 the second arm 34 of the strip 30 is shorter than the first arm 33 of the of the strip 30, and the third arm 35 of the strip 30 is longer than the second arm 34 of the strip 30 and shorter than the first arm 33 of the of the strip 30. The fourth arm 36 of the strip 30 is shorter than the third arm 35 of the of the strip 30. The fifth arm 37 of the strip 30 is longer than the fourth arm 36 of the of the strip 30.

The first arm 33 of the strip 30 may have a length (dimension "D1" in Fig. 3) of 5 (0.04*λ*) to 15 mm (0.12*λ*). The second arm 34 of the strip 30 may have a length (dimension "D2" in Fig. 3) of 1 (0.008*λ*) to 10 mm (0.08*λ*). The third arm 35 of the strip 30 may have a length (dimension "D3" in Fig. 3) of 2 (0.016*λ*) to 10 mm (0.08*λ*). The fourth arm 36 of the strip 30 may have a length (dimension "D4" in Fig. 3) of 1 (0.008*λ*) to 5 mm (0.04*λ*). The fifth arm 37 of the strip 30 may have a length of 2 (0.016*λ*) to 10 mm (0.08*λ*).

In the example of Fig. 1 the second antenna element 40 comprises a first strip 41 having an end 42 electrically connected to the ground plane 20 and a free end 43. The first strip 41 comprises a first arm 44 and a second arm 45 extending at an angle of about 90 degrees from the first arm 44 so that the second arm 45 points towards the first antenna element 30 (resulting in an "inverted L-shape" of the first strip 41). The first arm 44 comprises the end 42 electrically connected to the ground plane 20 and is oriented at an angle of about 90 degrees relative to the longitudinal edge 25 formed by the 23 end of the ground plane 20. The second arm 45 comprises an end forming the free end 43 of the first strip 41. The first arm 44 of the first strip 41 extends in the longitudinal direction 21, while the second arm 45 of the first strip 41 extends in the transverse direction.

The second arm 45 is shorter than the first arm 44. For example, the first arm 44 of the first strip 41 may have a length (dimension "S1" in Fig. 3) of 5 (0.04*λ*) to 15 mm (0.12*λ*), and the second arm 45 of the first strip 41 may have a length (dimension "S2" in Fig. 3) of 1 (0.008*λ*) to 17 mm (0.136*λ*).

The first strip 41 of the second antenna element 40 may have a width similar or larger than the width of the strip 30 forming the first antenna element. For example, the width (dimension "S4" in Fig. 3) of the first strip 41 of the second antenna element 40 may be from 0.1 (0.0008*λ*) to 3 mm (0.025*λ*).

The dimensions of the parasitic antenna element 40 are directly related to the respective dimension of the driven antenna element 30 in the sense that the dimensions of the parasitic antenna element 40 are tuned accordingly to ensure the desired coupling and radiation pattern.

As already mentioned above, the first antenna element 30 and the second antenna element 40 may be implemented as conductor traces on a PCB. For example, the antenna elements 30, 40 may be implemented on an FR4 substrate 70 (εᵣ=4.4, tanδ=0.02). Other examples are Rogers laminates, ceramic substrates, PTFE laminates and flexible substrates. According to one example, the antenna elements 30, 40 may be located in the same layer of the PCB, although in other examples they may located in different PCB layers.

Also the ground plane 20 may be implemented as a conductor plane, i.e., as a conductor layer, of the PCB; in particular, the ground plane may be located in the same layer of the PCB as the two antenna elements 30, 40 (if located in the PCB same layer) or as one of the two antenna elements 30, 40 (if located in different PCB layers).

As schematically illustrated in Fig. 1, the current 80A through the driven first antenna element 30 generates electric dipole radiation, while the current 80B through the first antenna element 30, the second antenna element 40 and the edge 25 of the ground plane 20 forms a magnetic which generates magnetic dipole radiation. This electric and magnetic radiation modes combine in way that allows to achieve a close to isotropic radiation pattern due to the coupling of the two antenna elements 30, 40.

The transmission system 10 may be implemented in wireless mobile electronic devices, such as a wireless microphone device comprising a microphone arrangement for capturing ambient sound, in particular speech from persons, wherein the transmission system is used to send the captured audio signals to hearing devices, in particular hearing aids.

The geometry and dimensions of the parasitic antenna element 40 are directly related to the geometry and the respective dimensions of the driven antenna element 30 in the sense that the geometry and dimensions of the parasitic antenna element 40 are tuned accordingly to ensure the desired coupling and radiation pattern.

In general, the arrangement formed by the first antenna element and the second antenna element has no symmetry plane; in particular, there is no symmetry with regard to a plane or line extending parallel to the longitudinal direction 21. This can be achieved, for example, by selecting the shape and/or the dimensions/size of the first antenna element and the second antenna element such that the first antenna element and the second antenna element are not mirror-symmetric relative to each other, or/and by arranging the first antenna element and the second antenna element in an asymmetric manner.

Hereinafter variations of the geometry of the first and second antenna elements are described.

Figs. 2 and 3 illustrate an example of the transmission system 10 wherein the geometry of the first antenna element 30 and the second antenna element 40 has been modified.

The strip 30 forming the first antenna element 30 - in contrast to the example shown in Fig. 1 - does not comprise a fifth arm 37, so that the free end 32 of the strip 30 is formed by an end of the fourth arm 36.

The first 41 of the second antenna element 40 - contrast to the example shown in Fig. 1 - includes a third arm 46 comprising an end forming the free end 43 of the first strip 41 and extending from the second arm 45 at an angle of about 90 degrees so that the free end 43 of the first strip 41 points towards the ground plane 20 (this geometry may be characterized as an "L-hook shape").

In the example of Figs. 2 and 3 the first arm 44 is shorter than the second arm 45, and the third arm 46 is shorter than the first arm 44. For example, the third arm 46 of the first strip 41 may have a length (dimension "S3" in Fig. 3) of 1 (0.008*λ*) to 10 mm (0.0'8*λ*).

The distance in the transverse direction 22 between the third arm 35 of the strip 30 and the third arm 46 of the strip 41 (dimension "L" in Fig. 3) may be from 6 (0.048*λ*) to 10 (0.08*λ*) mm.

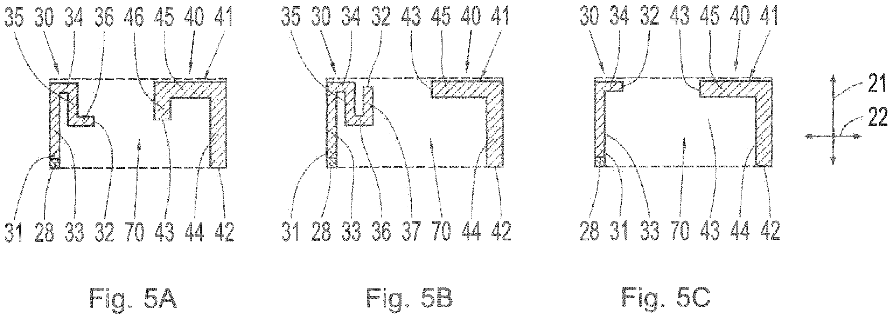

Figs. 5A to 5C illustrate further examples of the transmission system 10 wherein the geometry of the first antenna element 30 is varied, while the geometry of the second antenna element 40 in Fig. 5A corresponds to the example shown Figs. 2 and 3 and in Figs 5B and 5C corresponds to that of Fig. 1. Fig. 5A corresponds to the example of Figs. 2 and 3. Fig. 5B relates to a combination of the geometry of the first antenna element 30 of Fig. 1 with the geometry of the second antenna element 40 of the example of Figs. 2 and 3. Fig. 5C relates to an example wherein the geometry of the first antenna element 30 has been modified compared to the example of Figs. 2 and 3 by omitting the third arm 35 and the fourth arm 36, so that free end 32 of the strip 30 is formed by an end of the second arm 34 (resulting in an "inverted L-shape" of the strip 30).

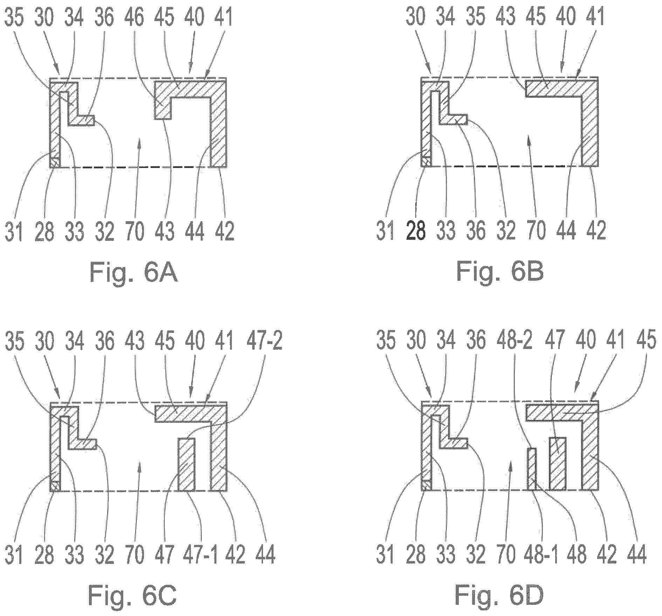

Figs. 6A to 6D illustrate further examples of the transmission system 10 wherein the geometry of the second antenna element 40 is varied, while the geometry of the first antenna element 30 corresponds to the example shown Figs. 2 and 3. Fig. 6A corresponds to the example of Figs. 2 and 3. Fig. 6B relates to a combination of the geometry of the first antenna element 30 of Figs. 2 and 3 with the geometry of the second antenna element 40 of the example of Fig. 1.

Fig. 6C relates to an example wherein the geometry of the second antenna element 40 has been modified compared to the example of Fig. 1 by adding a second strip 47 having an end 47-1 electrically connected to the end 23 of the ground plane 20 and a free end 47-2. The second strip 47 of the second antenna element 40 has a straight shape and extends away from the end 23 of the ground plane 20 in the longitudinal direction 21 parallel to the first arm 44 of the first strip 41 element towards the second arm 45 of the first strip 41. In this example the second antenna element 40 comprises two free ends 43 and 47-2.

Fig. 6D relates to a modification of the example of Fig. 6C wherein a third strip 48 has been added, which, similar to second strip 47, has an end 48-1 electrically connected to the end 23 of the ground plane 20 and a free end 48-2 and extends in parallel to second strip 47.

It is noted that according to a modification of the example of Fig. 6D the second arm 45 of the first strip 41 may be removed, so that the second antenna element 40 then consists of three parallel strips 41, 47 and 48, each having a free end 43, 47-2 and 48-2 and a end 42, 47-1, 48-1 electrically connected to the ground plane 20.

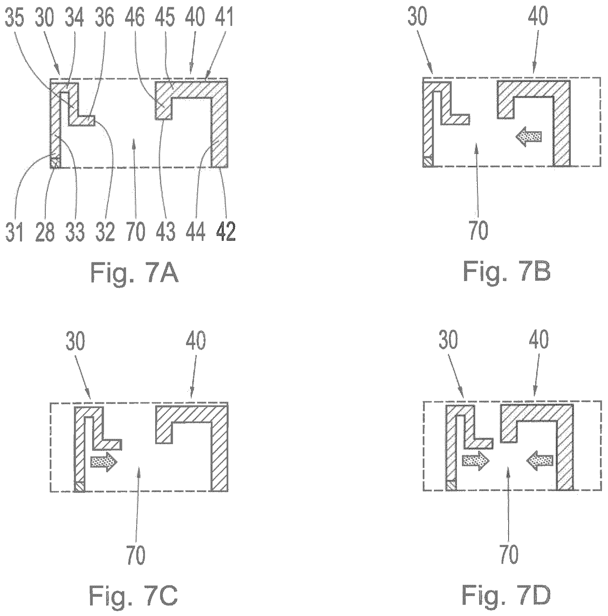

Figs. 7A to 7D show various examples of how the two antenna elements 30, 40 may be arranged relative to each other. Fig. 7A illustrates the configuration of Figs. 1 to 6, wherein the first arm 33 of the first antenna element 30 and the first arm 44 of the second antenna element 40 are arranged at the respective lateral edge 24 of the ground plane 20. Fig. 7B illustrates a configuration wherein the second antenna element 40 is shifted in the lateral direction 22 towards the first antenna element 30 so as to reduce the distance between the two antenna elements 30, 40. Fig. 7C illustrates a configuration wherein, alternatively, the first antenna element 30 is shifted in the lateral direction 22 towards the second antenna element 40 so as to reduce the distance between the two antenna elements 30, 40. Fig. 7D illustrates a further alternative configuration wherein both the first antenna element 30 and the second antenna element 40 are shifted in the lateral direction 22 towards each other

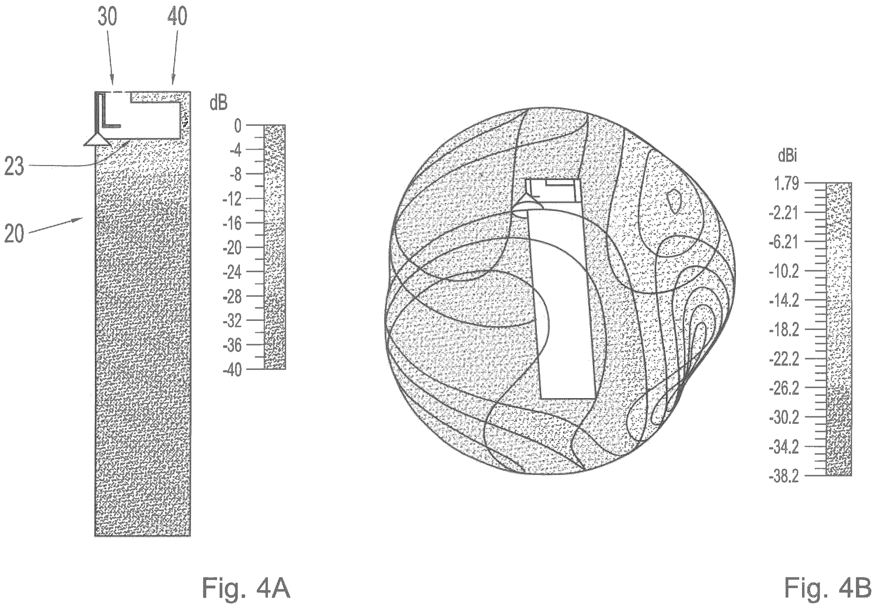

Figs. 4A and 4B illustrate a simulation results of the surface current distribution and the radiation pattern at 2.44 GHz, respectively, of an antenna configuration according to the example Fig, 6B. It can be seen that a close to isotropic radiation pattern is achieved and that the current is mainly present in the antenna elements 30, 40 and in the region close to the longitudinal edge 25 at the longitudinal end 23 of the ground plane 20. This current distribution renders the antenna formed by the antenna elements 30, 40 less susceptible to interference from RF components 90 located at the ground plane 20 (cf. Fig. 1)

It is noted that the dimensions of the antenna elements are susceptible to variation within certain ranges depending on the dimension of the ground plane (length and width), the dielectric properties of the substrate, as well as the housing of the structure. In particular, for achieving maximal antenna efficiency, the free end 32 of the driven antenna element 30 should not be positioned too close to the ground plane 20, for example, keeping a minimum distance of not less than 5 mm (0.04*λ*).

It is noted that while in the examples shown in the Figures the arms of the antenna elements are straight and oriented at angles of about 90 degrees relative to each other, in other examples the arms may include comprise slightly bent portions and the arms may be arranged at other angles of from 30 to 150 degrees relative to each other.

## Claims

1. A transmission system for a wireless mobile electronic device, comprising:
a ground plane (20);
a first antenna element which is separate from the ground plane and which is implemented as a strip (30) comprising a feeding end (31) configured to be coupled to a transceiver (60) for feeding an RF signal to the first antenna element and a free end (32), wherein the strip comprises a first arm (33) including the feeding end and a second arm (34) extending at an angle from the first arm; and
a second antenna element (40) separate from the first antenna element, which is shorted to the ground plane so as to act as a parasitic element,
wherein the first and second antenna elements are located adjacent to each other at an end (23) of the ground plane, wherein the second arm of the first antenna element points towards the second antenna element, and wherein the arrangement formed by the first and second antenna elements has no symmetry plane.

2. The transmission system of claim 1, wherein the first arm (33) of the first antenna element (30) has a length of 5 to 15 mm.

3. The transmission system of one of the preceding claims, wherein the second arm (34) of the first antenna element (30) has a length of 1 to 5 mm.

4. The transmission system of one of the preceding claims, wherein the second arm (34) of the first antenna element (30) forms an angle of from 30 to 150 degrees with the first arm (33) of the first antenna element.

5. The transmission system of one of the preceding claims, wherein the distance of the free end (32) of the strip (30) of the first antenna element to said end (23) of the ground plane (20) is at least 5 mm.

6. The transmission system of one of the preceding claims, wherein the lateral distance of the free end (32) of the strip (30) of the first antenna element to the second antenna element (40) is at least 2 mm.

7. The transmission system of one of the preceding claims, wherein the second antenna element (40) comprises a first strip (41) having an end (42) electrically connected to the ground plane (20) and a free end (43).

8. The transmission system of claim 7, wherein the second antenna element (40) comprises a second strip (47) having an end (47-1) connected to said end (23) of the ground plane (20) and a free end (47-2).

9. The transmission system of one of the preceding claims, wherein each antenna element (30, 40) is located at one of the two lateral edges (24) of said end (23) of the ground plane (20).

10. The transmission system of one of the preceding claims, wherein the ground plane (20) has an elongate shape defining a longitudinal direction (21) and a transverse direction (22), wherein said end (23) at which the antenna elements (30, 40) are located is one of the two longitudinal ends of the ground plane, wherein the ground plane (20) has a substantially rectangular shape with a length of 60 to 150 mm and a width of 15 to 45 mm.

11. The transmission system of one of the preceding claims, wherein each of the first and second antenna element (30, 40) extends by 5 to 15 mm beyond said end (23) of the ground plane (20) in the longitudinal direction (21).

12. The transmission system of one of the preceding claims, wherein the first antenna element (30) and the second antenna element (40) are implemented as conductor traces on a PCB (70).

13. The transmission system of one of the preceding claims, wherein the transmission system (10) comprises the transceiver (60) and optionally a matching network (62).

14. The transmission system of claim 13, wherein the transceiver (60) is implemented by an RF chipset.

15. The transmission system of one of the preceding claims, wherein the transceiver (60) is configured to generate the RF signal at frequencies between 2.4 and 2.4835 GHz.
